# NEW EUROPEAN PATENT SPECIFICATION

(11) **EP 0 440 276 B2**
(45) Date of publication and mention of the opposition decision: **08.10.2003**
(45) Mention of the grant of the patent: 28.02.1996
(21) Application number: 91200067.6
(22) Date of filing: 15.01.1991
(51) Int. Cl.: H04B 10/20, H04B 10/16

(54) **Optical fibre telecommunications line with separate service channels**
Lichtwellenleiternachrichtenübertragungsleitung mit getrennten Dienstkanälen
Ligne de télécommunication à fibre optique avec voies de service séparées

(30) Priority: 30.01.1990 IT 1918690
(43) Date of publication of application: 07.08.1991
(73) Proprietor: PIRELLI CAVI E SISTEMI S.p.A., 20126 Milano (IT)
(72) Inventor: Grasso, Giorgio, I-20052 Monza (Milano) (IT); Tamburello, Mario, I-20059 Vimercate (Milano) (IT)
(74) Representative: Marchi, Massimo, Dr.

(56) References cited:
- EP-A- 0 414 333
- AU-A- 7 836 887
- DE-A- 3 907 497
- DE-A- 3 913 300
- FR-A- 2 546 012
- NL-A- 8 801 590
- US-A- 4 406 919
- US-A- 4 886 334
- IEEE TRANSACTIONS ON COMMUNICATION TECHNOLOGY. vol. COM35, no. 4, April 1987, NEW YORK US pages 419 - 426; S.S.WAGNER: 'Optical Amplifier Applications in Fiber Optic Local Networks'
- Breitbandverteilnetze der Deutschen Bundespost, 2. überarbeitete und erweiterte Auflage, herausgegeben von Dipl. Ing Hans Stekle
- Verfahren für schmalbandige Rückkanäle in Breitbandverteilnetzen, von Rudolf Scholz, Universität Stuttgart
- Proceedings IEEE Global Telecommunication Conference, vol 1, 27/11/89 Dallas US Pages 1-9
- M. Settembre et al "Gain compression in fibre amplifiers in presence of ESA" ECOC 1989, Sept. 10-14, 1989 Gothenburg (SE) vol.1 TuP-15 Pages 502-505
- G. Winzer, Journal of Lightway Tech. Vol LT-2, N°. 4 August 1894, pages 369-378
- S.S. Wagner and H. Kobrinski, IEEE Communication Magazine, March 1989 pages 22-29
- J.M. Senior Optical Fiber Communication-Principles and Practice, Prentice/Hall International Inc. London 1985
- M. Delzenne et al, Supervision of optical CATV trunk networks, Commutation & Transmission, N°3, 1989
- A.D. Ellis et al., Supervisory System For Cadscaded Semiconductor Laser Amplifier Repeaters, Electronic Letters 2/3/89, Vol 25, N°5
- J.D.Cox et al., First Field Demonstation Of In-Service Fault Location/Supervisory Using Optical Time Domain Reflectometry, Electronics Letters 18/1/90, Vol. 26, N°2
- L.C. Blank et al., Optical Time Domain Reflectometry on Optical Amplifier Systems, Journal of Lightwave Technology, Vol.7, N°10, October 1989
- M.J Miniscalco and L.J Andrews, Fiber Optic Lasers and Amplifiers for the Near-Infrared, Materials, Science Forum Vols. 32-33 1988 pp 501-510, Copyright Trans Tech Publications, Switzerland
- Neues LWL-system überträgt 140-Mbit/s-Signale, Telcom report 9 (1986), Heft 5, Seiten 293-301

## Description

The present invention relates to an optical fibre telecommunications line, provided with an independent channel for service communications.

Communications lines, suitable for allowing the transmission of communications over great distances, in addition to the channels used for communications signals. placed at the disposal of subscribers, usually also provide for an independent channel, suitable for allowing the transmission of service communications.

Such service signals can be of different kinds, say control or command signals for equipment located along the line, such as amplifiers or repeaters, or communications between maintenance staff, operating at a point along the line, and an intermediate or end station of the line itself.

In an optical fibre telecommunications line, provided at regular intervals with repeaters for the amplification of the transmitted signals, one or more of the communications channels may be used for the service signals, which are accessible, for sending or receiving service signals, at each repeater, where the optical signals are detected and transformed into electrical signals, electronically amplified and once again sent towards the destination station, in an optical form.

in such repeaters a service signal converted into an electrical form can be easily received and used for the desired purposes and in a similar manner signal may be injected in an electric form into the repeater and then converted into an optical signal together with the other signals subjected to amplification and sent alongthe line.

However, optical fibre telecommunication lines have currently proved convenient which, instead of repeaters, of an electronic type, use optical amplifiers, in a position of amplifying the signal without converting it into an electrical form.

In such lines it is not possible for signals to be injected into or to be extracted from the fibre along which they are transmitted with the known electronic equipment, because the signals are available only in an optical form, even at the amplifiers.

The problem therefore arises of injecting into and extracting from an optical telecommunications line, provided with optical amplifiers, the service signals, by operating on the signals themselves in an optical form.

There are known devices called optical couplers, suitable for injecting into or for extracting from an optical fibre signals having a wavelength different from that of the other signals, which pass unaltered, but, in order for such couplers to operate correctly, with a complete separation between the extracted signals and the unaltered signals and with a reduced attenuation of the signals themselves, they must operate between wavelengths that are substantially different, while optical communications are accomplished in a fairly narrow range of wavelengths, where the transmission characteristics of the fibre are better.

The object of the present invention is thus to provide an optical fibre transmission line where it is possible to inject and extract service optical signals, without having to convert the transmitted signals into an electrical form,

The object of the present invention is solved by claim 1.

The wavelength of the service signals is substantially equal to or differs only slightly, from the wavelength corresponding to a minimum of the attenuation curve of the light in the optical fibre in relation to the wavelength.

Conveniently such wavelength of the telecommunications signals ranges substantially from 1500 to 1600 nm and the wavelength of the service signals ranges from 1200 to 1400 nm, said service signals being transmitted at a rate substantially lower than 300 Kbit/sec.

Preferably the optical couplers are constituted by dichroic fibre couplers.

In greater detail, in such a preferred embodiment the line optical amplifier or amplifiers are constituted by sections of active fibre, doped with fluorescent substances and by means for injecting into the sections of active fibre luminous pumping energy, having a wavelength different from the telecommunications wavelength, generated by respective pumping lasers. The reception and emission units of the service signals comprise means for the control and command of the amplifier's pumping laser or lasers. driven by the service signals.

In a preferred embodiment of the invention the means for injecting luminous pumping energy into the active fibre sections of at least one optical amplifier and one optical coupler of the service signals at the amplifier itself are constituted by a single three-wavelength optical coupler.

Greater details can be seen from the following description of the invention, with reference to the enclosed drawings, which show:
- in Fig. 1,: a diagram of an optical fibre telecommunications line, with line amplifiers:
- in Fig. 2,: a diagram of an optical fibre telecommunications line, with line amplifiers, provided with inputs and outputs for service communications according to the invention:
- in Fig. 3,: a diagram of an optical amplifier for a telecommunications line, provided with inputs and outputs for service channels according to the invention;
- in Fig. 4,: a diagram of an optical amplifier for a telecommunications line, provided with inputs and outputs for service channels according to the invention, in a particular embodiment:
- in Fig. 5,: a diagram of the curve of the light attenuation in a silica optical fibre, in relation to the wavelength of the injected light.

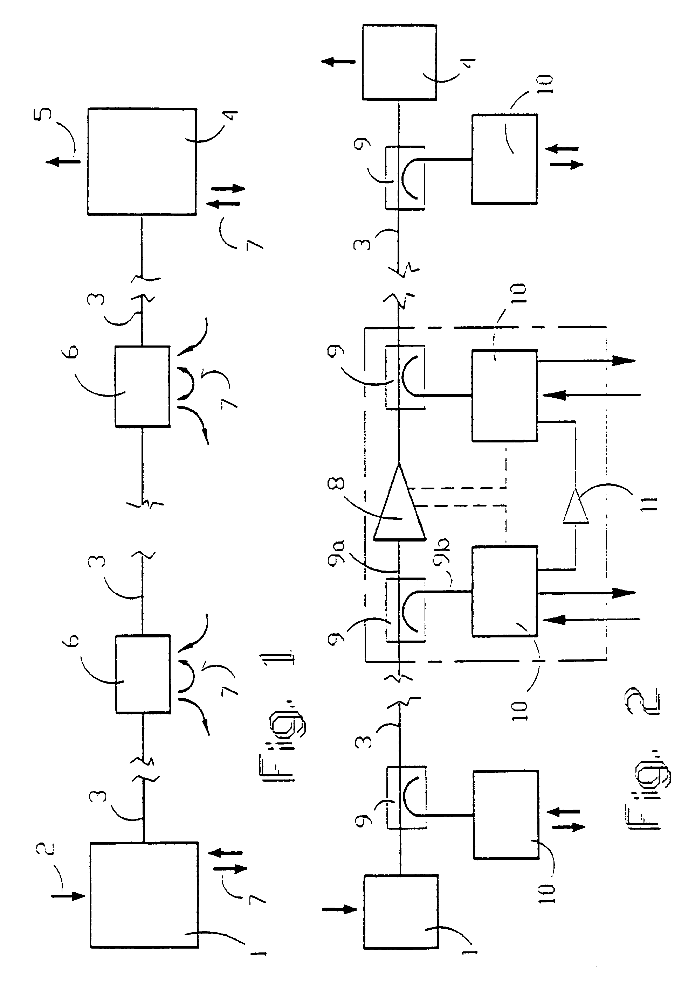

As shown by Fig. 1 a telecommunications line of the optical type comprises in general a station 1 for the emission of optical signals. wherein the signals 2 to be transmitted are received, usually in the form of electrical signals, and emitted in an optical form injected into an optical fibre 3, constituting the line.

At the opposite end of fibre 3. at a great distance from the emission station 1, even of the order of hundreds of kilometres, there is a reception station 4, suitable for receiving the optical signals transmitted along the fibre, for converting them into signals of another nature, say electrical signals, and for sending such signals 5 to the reception equipment, not shown.

The emission and reception stations are known in themselves and shall not be described further.

Along the fibre 3, due to the attenuations to which the optical signal is inevitably subjected in its path along the fibre itself, there are line amplifiers 6, suitable for receiving the optical signal attenuated after a certain length of fibre and for emitting it after having restored it to the original level, to allow it to pass along a further fibre section, up to a new amplifier or up to the receiving station, maintaining itself to destination at a level which will allow it to be received correctly.

A telecommunications line, operating over great distances, comprises a certain number of amplifiers, in relation to the overall distance to be covered, to the fibre's attenuation, to the gain of the amplifiers and to the minimum level acceptable for the signal at reception.

The amplifiers 6, of whatever type they may be. provide in general for the reception and/or emission of control signals, say for the activation or the check of the operation of some of their components, and. in addition, are subjected to maintenance activities for which an operator may have to communicate with the terminal emission or reception stations, or with other line amplifiers.

In all these cases it is thus required to introduce into the communication line further signals 7, which may be received and injected at any line amplifier or at the terminal stations.

In the case wherein the line amplifiers are repeaters. which thus receive optical signals travelling on the line. convert them into an electrical form, amplify them electronically and retransmit them in an optical form into the subsequent line section. the service signals may be of the same type as the communications signals and recognised by and separated from the same, or they may be introduced into the line. when all the signals are converted in an electrical form in the amplifiers or in the terminal stations, to be used as required.

In optical fibre telecommunications lines there is, however, convenient use for amplifiers of the optical type, wherein the signals are amplified while remaining in an optical form in such cases, therefore, it is not possible to separate by electronic means the service signals from the communication signals travelling in the same fibre without interrupting the fibre itself.

For such purpose according to the invention, as illustrated by Fig. 2, at least one optical amplifier 8, generically represented in the figure, there are upstream and downstream from the same, two dichroic couplers 9, suitable for receiving in a common input the communication signals and the service signals, having wavelengths that are different and multiplexed on the same fibre and for separating at output on two outgoing fibres 9a and 9b the communication signals at one wavelength and the service signals at a different wavelength, respectively, and also suitable for sending in a single outgoing fibre the communication signals and the service signals separately injected into fibres 9a and 9b.

Similar dichroic couplers are present at the emission and reception stations 1, 4.

In order to accomplish the separation between the signals by means of dichroic couplers, the wavelength of the service signals is selected to be appreciably different from that of communication.

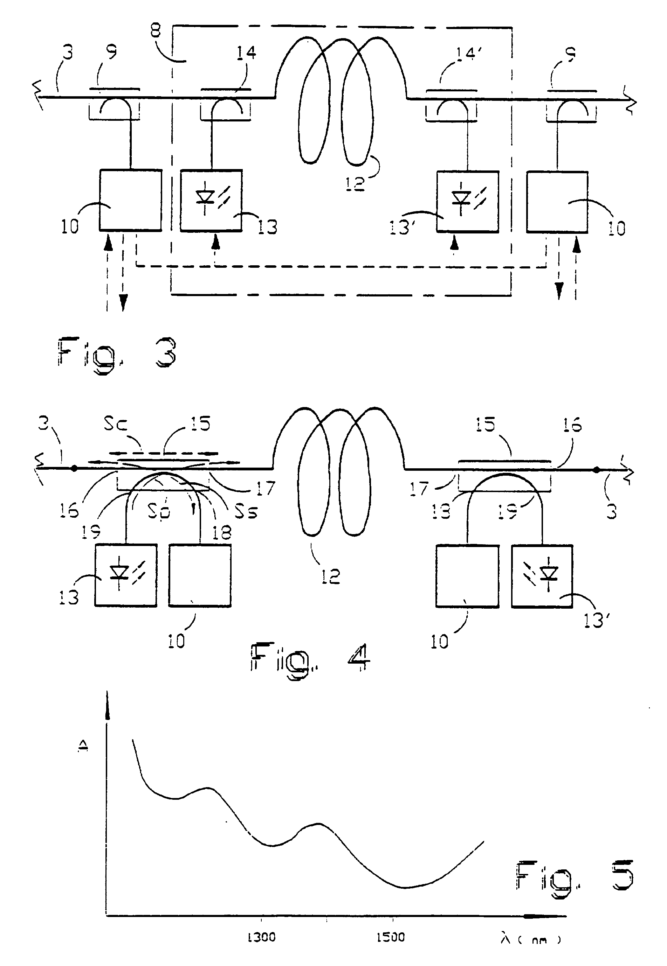

The communication wavelength usually ranges from 1500 to 1600 nm, in an area called third window, so as to operate at the minimum of the light attenuation in silica glass fibres, as illustrated in the diagram of Fig. 5; as required for telecommunications, this allows the transmission of data at high speed, of the order of several hundred Mbit/sec, over distances of tens or hundreds of kilometres before amplification, maintaining the signals at levels sufficient for a correct final reception.

The service signals, on the other hand, in view of their characteristics, can be transmitted at low speed, of the order of some hundreds of Kbit/sec, in particular below 300 Kbit/sec; according to the invention such service signals are then emitted at a wavelength around 1300nm, at a secondary minimum of the light attenuation curve in silica glass, called second window.

In the following text, the words around 1300 nm shall mean a wavelength in the wavelength range typical of the above mentioned second window, where there is a relatively low attenuation; the amplitude of such range depends on the specific characteristics of the line fibre used; a preferred range, for commonly produced line fibres, can be from 1200 to 1400 nm.

The light attenuation at such wavelength is appreciably higher than at 1500-1600 nm, and would not allow the coverage of the distance between two successive amplifiers with an arrival level acceptable for the reception equipment suitable for operation at the transmission speeds used for the communication signals indicated above; but the service signals, on the other hand, transmitted at lower speeds (typically 128 Kbit/sec, can be received by very sensitive receivers and thus a wavelength around 1300 nm is acceptable for them.

This makes it possible to use commercially produced dichroic couplers, such as fibres that are fused or accomplished in micro-optics, having excellent features in terms of attenuation and limited cost.

Each dichroic coupler 9 is connected, with the corresponding outgoing fibre 9b carrying the service signals, to a respective connecting unit 10, through which the service signals leaving the coupler are received and converted into corresponding output electrical signals, and input electrical signals are converted into optical signals at the service wavelength and injected at the input into the fibre 9b to be multiplexed along the line.

In this way an optical signal, at 1300 nm, extracted from line 3 by dichroic coupler 9, is transformed into a corresponding electrical signal, which may be used for the purposes provided for it, such as, say, service telephone communications of maintenance or control personnel of optical amplifier 8, as represented by dotted lines in Fig. 2, or for further commands or controls; in a similar manner, electrical control signals or service telephone communications can be sent along fibre 3 of the line to reach other destinations.

To allow the service signals to reach amplifiers or terminal stations located at a great distance from the place at which the signal is emitted, along a fibre having several optical amplifiers, the electrical signal in output from a unit 10 connected to a dichroic coupler 9, located upstream from an optical line amplifier 8, is electronically amplified, in a known manner, by a corresponding service amplifier 11 and then sent to the input of a unit 10 connected to a second dichroic coupler 9, downstream from the optical amplifier, suitable for sending the appropriately amplified service signal along the subsequent optical fibre section, up to the destination station or to a new optical amplifier.

In this way the service signal is amplified autonomously, at each optical amplifier of the line and can thus travel along the entire distance required and arrive at destination at a level sufficient for the purposes assigned to it.

Fig. 3 shows in greater detail an embodiment of the invention, which shows an optical amplifier 8 which comprises an active optical fibre 12, having a suitable length, doped with a fluorescent substance, a pumping laser 13, connected to a corresponding dichroic coupler 14, suitable for sending inside the active fibre luminous energy suitable for producing a stimulated emission inside the fibre itself, which generates the requested amplification.

Preferably, but not necessarily, there can also be a second pumping laser 13' and a corresponding dichroic coupler 14', arranged at the opposite end of the active fibre 12 with respect to coupler 14 and mirror oriented, with the purpose of enhancing the pumping power inside the active fibre and/or constituting a pumping means of the active fibre held in reserve in case of malfunction of the first pumping laser 13.

In must in any case be observed that the possible presence of the second pumping laser 13' and of the coupler 14' is substantially non-influent, in this embodiment, for the purpose of transmitting service signals along the optical line according to the present invention.

As already illustrated with reference to Fig. 2, amplifier 8 is preceded and followed by the dichroic couplers 9, connected to their respective service signals reception and transmission units 10. The lasers 13 and 13' are connected, as represented by the dotted lines, to units 10 and can thus receive or send control or similar signals which govern their operation.

Fig. 4 shows a particular embodiment of the invention, in which there are two pumping lasers, 13 and 13' and each of them, together with a reception or transmission unit 10, is connected to a single three-wavelength optical coupler 15, so that the pumping laser sends the corresponding luminous energy towards the active fibre 12, while the reception and transmission unit 10 receives service signals, separate from the optical fibre 3 of the line, before they arrive at the active fibre itself and/or injects service signals into fibre 3 after the active fibre.

In greater detail, as schematically indicated in Fig. 4 by the arrows designated with Sc, Ss, Sp, respectively, each dichroic coupler 15 is in the position of allowing the communication signal Sc, at the communications wavelength (1500-1600 nm), carried by line fibre 3 to the coupler's input connection 16, to be emitted unaltered at the output connection 17, to which the amplifier's active fibre 12 is connected; the service signal Ss, at the service wavelength (1300 nm), present at input connection 16, is addressed to the coupler's output connection 18, to which unit 10 is connected (and vice versa, a signal emitted by unit 10, carried as an input to connection 18 is sent, along the same optical path, as an output to connection 16); the pumping signal Sp, at the pumping wavelength, is sent by pumping laser 13 or 13' as an input to connection 19 and is sent as an output to connection 17.

Three-wavelength optical couplers having the indicated characteristics, constituted by a single monolithic element, say, of the fused fibre type, are known and their accomplishment is made easy and sufficiently inexpensive when the wavelengths to be coupled are appreciably separated one from the other: say, in combination with a communication signal wavelength around 1550 nm a service signal wavelength is used around 1300 nm, as described above and, in the case of an active amplification fibre doped with Erbium, a pumping wavelength of 980 or 530 nm.

Such an accomplishment offers the considerable advantage of accomplishing, with the same component, both the sending of the pumping energy in the amplification fibre, and the extraction or the sending of the service signals in the line fibre, simplifying the amplifier structure and especially reducing the number of junctions between fibres and couplers, each of which is the cause of attenuation for the transmitted signal.

In case the use of the second pumping laser 13' is not desired, in place of one of the three-wavelength couplers 15, to which such laser should have been connected, it is possible to use a dichroic coupler 9, as described previously, merely for the connection of the service reception and transmission unit 10.

Although the injection into and the extraction from the optical line of the service signals is conveniently executed at the line's end stations and at the line amplifiers, as described previously, it is possible to introduce dichroic couplers and service signal reception and transmission stations at any other position of the optical fibre line where its need may be felt.

In the case of particular requirements of the line or in the structure of the couplers, a wavelength may be adopted, for the service signals, other than that around 1300 nm indicated previously, accepting the signal attenuation level which corresponds to the selected wavelength.

In addition, within the scope of the present invention, in the presence of fibres having particular transmission characteristics, instead of the wavelength around 1300 nm, in the sense previously defined, a different wavelength, or a different range of wavelengths, may be adopted for the service signals, corresponding to a relative attenuation minimum, or in any case to a sufficiently low attenuation value, in relation to the power and to the sensitivity of the transmission and reception equipment, as long as it is sufficiently far from the range of transmission wavelengths as to allow the accomplishment of the corresponding optical couplers.

For the purpose of the present invention it is intended that line end stations are two points of the line itself between which the signals travel solely in an optical form, amplified where necessary by optical amplifiers of the type described above.

## Claims

1. Optical fibre transmission line, comprising:
a) at least one emission station (1) and one reception station (4) of telecommunication signals; and
b) at least one optical amplifier (6, 8),
***characterized in that** it comprises*:
c) means (9, 10) for injecting and for extracting optical service signals from the optical fibre line (3), wherein
d) said means comprise at least one emission and one reception unit (10) of optical service signals,
e) said reception unit (10) being suitable for receiving from the optical line and said emission unit (10) being suitable for emitting towards the same service signals, constituted by communication or control signals, electrically taken from said reception unit (10) and supplied to said emission unit (10) in the form of optical signals having a wavelength which is substantially different from the wavelength of the telecommunication signals,
f) wherein said reception and said emission units (10) are associated with a corresponding optical coupler (9), inserted along the fibre line (3), extracting from and, respectively, for injecting into said optical fibre line (3) the optical service signals,
g) with the optical amplifier (6, 8) or with each optical amplifier there being associated at least one means (9,10) for injecting and for extracting optical service signals,
h) there being present at at least one optical amplified a reception unit (10) and an emission unit (10) of service optical signals, and corresponding optical couplers (9) inserted along the line fibre (3), upstream and downstream from the optical amplifier (8), respectively in the direction in which the service signals are to be sent;
i) said reception and emission units (10) are connected together electrically, with the interposition of electronic amplification means (11), for receiving optical service signals from the line. (3), for transforming them into electrical signals, for amplifying them electronically and for converting the amplified electric signals into optical signals at the service wavelength and for sending them along the line.

2. Optical fibre transmission line according to claim 1, ***characterized in that*** the wavelength of the service signals is substantially equal to or differs only slightly from the wavelength corresponding to a minimum of the attenuation curve of the light in the optical fibre in relation to the wavelength.

3. Optical fibre transmission line according to claim 1, ***characterized in that*** the wavelength of the telecommunications signals ranges substantially from 1500 to 1600 nm and the wavelength of the service signals ranges from 1200 to 1400 nm, said service signals being transmitted at a rate substantially lower than 300 Kbit/sec.

4. Optical fibre transmission line according to claim 1, ***characterized in that*** the optical couplers (9) are constituted by dichroic fibre couplers.

5. Optical fibre transmission line according to claim [2]1, ***characterized in that*** the line optical amplifier (6, 8) or amplifiers are constituted by sections of active fibre (12), doped with fluorescent substances and by means (14) for injecting into the sections of active fibre (12) luminous pumping energy, having said wavelength different from the telecommunications wavelength, generated by respective pumping lasers (13).

6. Optical fibre transmission line according to claim [6]5, ***characterized in that*** the reception and emission units (10) of the service signals comprise means for the control and command of the amplifier's pumping laser or lasers (13) driven by the service signals.

7. Optical fibre transmission line according to claim 6, ***characterized in that*** the means (15) for injecting luminous pumping energy into the active fibre sections of at least one optical amplifier and one optical coupler of the service signals at the amplifier itself are constituted by a single three-wavelength optical coupler (15).

## Patentansprüche

1. Optische FaserFaser-Übertragungsleitung mit:
a) mindestens einer Sendestation (1) und einer Empfangsstation (4) für Telekommunikationssignale und
b) mindestens einem optischen Verstärker (6, 8),
**dadurch gekennzeichnet, daß** sie
c) Einrichtungen (9, 10) zum Injizieren und zum Extrahieren optischer Service-Signale aus der optischen Faserleitung (3) aufweist, wobei
d) die Einrichtungen mindestens eine Sende- und eine Emp-Empfangseinheit (10) für optische Service-Signale aufweisen, wobei
e) die Empfangseinheit (10) geeignet ist, von der optischen Leitung Service-Signale zu empfangen, und die Sendeeinheit (10) geeignet ist, Service-Signale in sie einzuspeisen, wobei die Service-Signale aus Kommunikations- oder Steuersignalen bestehen, die aus der Empfangseinheit (10) elektrisch entnommen und an die Sendeeinheit (10) geliefert werden und die optische Signale mit einer Wellenlänge sind, die sich von der Wellenlänge der Telekommunikationssignale wesentlich unterscheidet,
f) wobei die Empfangs- und die Sendeeinheiten (10) einem entsprechenden, entlang der Faserleitung (3) angebrachten Optokoppler (9) zum Extrahieren und zum Injizieren der optischen Service-Signale aus der bzw. in die optische Faserleitung (3) zugeordnet sind,
g) wobei mit dem optischen Verstärker (6. 8). oder mit jedem optischen Verstärker mindestens eine Einrichtung (9, 10) zum Injizieren und zum Extrahieren optischer Service-Signale verbunden ist,
h) wobei bei zumindest einem optischen Verstärker eine Empfangseinheit (10) und eine Sendeeinheit (10) für optische Service-Signale vorhanden und entlang der Faserleitung (3), stromaufwärtig bzw. stromabwärtig vom optischen Verstärker (8), in der Richtung, in die die Service-Signale gesendet werden sollen, entsprechende Optokoppler (9) eingefügt sind,
i) webei die Empfangs- und Sendeeinheiten (10) elektrisch miteinander verbunden sind und eine elektronische Verstärkungseinrichtung (11) zum Empfangen optischer Service-Signale äug der Leitung (3), zum Transformieren dieser Signale in elektrische Signale, zum elektronischen Verstärken dieser Signale und zum Konvertieren der verstärkten elektrischen Signale in optische Signale mit der Service-Wellenlänge und zum Senden dieser Signale entlang der Leitung zwischengeschaltet ist.

2. Optische Faser-Übertragungsleitung nach Anspruch 1,
**dadurch gekennzeichnet, daß** die Wellenlänge der Servicesignale im wesentlichen gleich oder sehr nahe der Wellenlänge ist, die einem Minimum der Dämpfungskurve des Lichts in der optischen Faser im Verhältnis zum Wellenlange entspricht.

3. Optische Faser-Übertragungsleitung nach Anspruch 1,
**dadurch gekennzeichnet, daß** die Wellenlänge der Telekommunikationssignale im wesentlichen von 1500 bis 1600 nm reicht und die Wellenlänge der Service-Signale von 1200 bis 1400 nm, wobei die Service-Signale mit eines Rate übertragen werden, die wesentlich unter 300 Kbit/s liegt.

4. Optische Faser-Übertragungsleitung nach Anspruch 1,
**dadurch gekennzeichnet, daß** die Optokoppler (9) dichroitische Faserkoppler sind.

5. Optische Faser-Übertragungsleitung nach Anspruch 1,
**dadurch gekennzeichnet, daß** der optische Leitungsverstärker (6, 8) oder die optischen Leitungsverstärker aus aktiven Faserabschnitten (12), die mit fluoreszierenden Substanzen dotiert sind, und aus Einrichtungen (14) zum Injizieren von Lichtpumpenergie in die aktiven Faserabschnitte (12) besteht bzw. bestehen, wobei die Lichtpumpenergie die Wellenlänge hat, die sich von der Wellenlänge der Telekommunikätionssignale unterscheidet und von entsprechenden Pumplasern (13) erzeugt wird.

6. Optische Faser-Übertragungsleitung nach Anspruch 5,
**dadurch gekennzeichnet, daß** die Empfangs- und Sendeeinheiten (10) für die Service-Signale Einrichtungen zum Steuern des Pumplasers bzw. der Pumplaser (13) des Verstärkers aufweisen, die von den Service-Signalen getrieben werden.

7. Optische Faser-Übertragungsleitung nach Anspruch 6,
**dadurch gekennzeichnet; daß** die Einrichtung (15) zum Injizieren von Lichtpumpenergie in die aktiven Faserabschnitte mindestens eines optischen Verstärkers sowie ein Optokoppler für die Service-Signale beim Verstärker selbst aus einem einzigen Drei-Wellenlängen-Optokoppler (15) bestehen.

## Revendications

1. Ligne de transmission par fibre optique, comprenant
a) au moins une station émettrice (1) et une station réceptrice (4) de signaux de télécommunication ; et
b) au moins un amplificateur optique (6. 8),
**caractérisée en ce qu'**elle comprend :
c) des moyens (9, 10) d'injection et d'extraction de signaux optiques de service de la ligne de fibre optique (3),
d) lesdits moyens comprenant au moins une unité d'émission et une unité de réception (10) des signaux optiques de service,
e) ladite unité de réception (10) étant capable de recevoir de la ligne optique et ladite unité d'émission (10) étant capable de lui envoyer, les mêmes signaux de service, lesquels sont constitués par des signaux de communication ou de commande, reçus électriquement de l'unité de réception (10) et fournis à ladite unité d'émission (10) sous la forme de signaux optiques qui ont une longueur d'onde sensiblement différente de la longueur d'onde des signaux de télécommunication,
f) lesdites unités de réception et d'émission (10) étant associées à un coupleur optique (9) correspondant insère le long de la ligne pour extraire de ladite ligne de libre optique (3) et, respectivement, y injecter les signaux optiques de service,
g) l'amplificateur optique (6, 8), ou chaque amplificateur optique, étant associé à au moins un moyen (9, 10) pour injecter et pour extraire les signaux optiques de service,
h) une unité de réception (10) et une unité d'émission (10) étant présentes au niveau d'au moins un amplificateur optique, ainsi que des coupleurs optiques correspondants (9), insérés le long de la ligne de la fibre (3), en amont et en aval de l'amplificateur optique (8), respectivement, par rapport à la direction dans laquelle les signaux de service sont envoyés,
i) lesdites unités (10) de réception et d'émission sont électriquement connectées ensemble, avec interposition de moyens électroniques. (11) d'amplification, pour recevoir des signaux optiques de service en provenance de la ligne (3), les transformer en signaux électriques, les amplifier dectroniquexnent et convertir les signaux électriques amplifiés en signaux optiques ayant la longueur d'onde de service et les envoyer sur la ligne.

2. Ligne de transmission par fibres optiques selon la revendication 1, **caractérisée en ce que** la longueur d'onde dès signaux de service est sensiblement égale, ou très peu différente, de la longueur d'onde qui correspond à un minimum de la courbe d'atténuation de la lumière, en fonction de la longueur d'onde, dans la Fibre optique.

3. Ligne de transmission par fibres optiques selon la revendication 1, **caractérisée en ce que** la longueur d'onde des signaux de télécommunication vaut sensiblement de 1500 à 1600 nm et la longueur d'onde des signaux de service vaut de 1200 à 1400 nm, lesdits signaux de service étant transmis à un débit sensiblement inférieur à 300. Kbit/sec.

4. Ligne de transmission par fibres optiques selon la revendication 1, **caractérisée en ce que** les coupleurs optiques (9) sont constitués de coupleurs à fibres dichroïques.

5. Ligne de transmission par fibres optiques selon la revendication 1, **caractérisée en ce que** l'amplificateur optique (8, 9), ou les amplificateurs, de la ligne sont constitués par des tronçons de fibre active (12) dopée par des substances fluorescentes et par des moyens (14) pour d'injection dans les tronçons de fibre active (12) une énergie lumineuse de pompage ayant ladite longueur d'onde différente de la longueur d'onde des signaux de télécommunication, énergie produite par des lasers de pompage respectifs (13).

6. Ligne de transmission par fibres optiques selon la revendication 5, **caractérisée en ce que** des unités (10) de réception et d'émission des signaux de service comprennent des moyens de réglage et de commande du ou des lasers (13) de pompage de l'amplificateur, excités par les signaux de service.

7. Ligne de transmission par fibres optiques selon la revendication 6, **caractérisée en ce que** les moyens (15) pour injecter une énergie lumineuse de pompage dans les tronçons de fibre active d'au moins un amplificateur optique et un coupleur optique des signaux de service se trouvant au niveau de l'amplificateur lui-même sont constitués par un coupleur optique unique (15) à trois longueurs d'onde.
